# FASCICULE DE BREVET EUROPEEN

(11) **EP 1 870 503 B1**
(45) Date de publication et mention de la délivrance du brevet: **22.07.2009**
(21) Numéro de dépôt: 07301144.7
(22) Date de dépôt: 22.06.2007
(51) Int. Cl.: D06C 3/06, D06H 3/12

(54) **Dispositif redresseur de trame d'un tissu pour machine textile au moyen de roues à aiguilles**
Gleichrichtervorrichtung eines Gewebeabschnitts für Textilmaschinen mithilfe von Nadelrädern
Device for straightening the weft of a fabric for a textile machine by means of needle wheels

(30) Priorité: 22.06.2006 FR 0652601
(43) Date de publication de la demande: 26.12.2007
(73) Titulaire: Viero, Luigi, 20020 Lainate (IT)
(72) Inventeur: Viero, Luigi, 20020 Lainate (IT)
(74) Mandataire: Thivillier, Patrick

(56) Documents cités:
- EP-A- 0 484 609
- EP-A- 0 547 401
- EP-A2- 0 453 099
- GB-A- 2 035 403

## Description

L'invention concerne le domaine technique des machines textiles en général.

Plus particulièrement l'invention concerne un dispositif destiné à redresser les fils de trame d'un tissu lors de son avancement.

Ainsi, l'invention trouve une application avantageuse notamment dans le cas de tissus à navette connus par l'homme du métier, dans le domaine de l'ennoblissement textile, sous le nom de « droit fil ». On n'exclut pas d'appliquer l'invention dans les tissus mailles.

Dans ce type de tissu, par définition, les fils de trame sont disposés perpendiculairement à la direction d'avancement du tissu.

Il est par ailleurs connu que, dans un procédé d'ennoblissement textile, il est souvent nécessaire de contrôler le droit fil du tissu préalablement, par exemple, à une étape d'impression du tissu. A défaut de procéder à un contrôle actif entre un rouleau de tissu en droit fil et une machine d'impression, par exemple, il peut y avoir des risques de déformation de la trame au fur et à mesure du déroulement et de l'étalement du tissu. Bien évidemment, cette déformation se retrouve au niveau du produit fabriqué à partir du tissu considéré.

Pour tenter de remédier à cette situation, on a proposé de disposer en amont des machines d'impression, par exemple, des machines ou dispositifs aptes à redresser la trame, généralement connues sous le nom de « redresseur de trame ». Le but recherché, à l'entrée des machines d'impression par exemple, est donc de dérouler le tissu en droit fil pour le disposer sur un tapis d'impression.

Parmi les différentes solutions connues, l'une d'entre elles consiste à utiliser des roues équipées périphériquement d'une pluralité d'aiguilles. Les roues, généralement au nombre de deux, exercent une mise en tension en combinaison avec les aiguilles pour redresser la trame afin que cette dernière soit perpendiculaire au sens d'entraînement du tissu. Généralement, les roues libres utilisées présentent un diamètre très important de l'ordre d'au moins 500 mm, les aiguilles assurant une mise en tension transversale du tissu, afin de provoquer le positionnement de la trame selon une ligne de jonction définie par les axes de rotation des roues à aiguilles considérées en position initiale, c'est-à-dire au moment de la mise en place du tissu.

Cet état de la technique peut être illustré par l'enseignement des brevets EP 0453099 et EP 0547401.

Pour obtenir un résultat satisfaisant, en considérant par ailleurs l'importance des forces de frottement, il est nécessaire, comme indiqué, d'avoir des roues de grand diamètre et de les soumettre à un mouvement de rotation continu afin d'éviter les distensions de trame, en considérant l'inertie et le frottement générés par l'entraînement et l'arrêt des roues.

A partir de cet état de la technique et pour remédier aux inconvénients en résultant, un des problèmes que se propose de résoudre l'invention est de supprimer les frottements, ou à tout le moins de les diminuer d'une manière très importante, en ayant pour objectif notamment de pouvoir utiliser des roues à aiguilles de petit diamètre et ne pas être obligé de les entraîner en continu.

Pour résoudre un tel problème, il a été conçu et mis au point un dispositif redresseur de trame d'un tissu pour machine textile au moyen de roues à aiguilles, le dispositif comprenant un ensemble support faisant office de palier pour le montage à libre rotation de chaque roue, ledit ensemble présentant des agencements pour créer une zone de sustentation pneumatique apte à diminuer les frottements lors de la rotation des roues sous l'effet de l'entraînement du tissu.

Compte tenu de ces caractéristiques, étant donné la quasi-absence de frottement et en utilisant un matériau très léger, l'inertie est réduite à son maximum, de sorte que le fonctionnement continu n'est plus obligatoire.

Selon une forme de réalisation et pour résoudre le problème posé de créer une zone de sustentation pneumatique, les agencements de l'ensemble sont constitués par une gorge annulaire dans laquelle est montée une partie de la roue faisant office de moyeu, ladite gorge étant en communication avec une chambre apte à être alimentée en air. La gorge présente une section transversale en U dont les branches verticales et horizontale sont en communication avec la chambre, par des orifices formés dans l'épaisseur desdites branches.

Selon une autre caractéristique, la chambre est alimentée en air par une canalisation formée dans un corps fixe recevant l'ensemble support.

Un autre problème que se propose de résoudre l'invention est de pouvoir régler à volonté l'espace de sustentation entre les surfaces latérales en créant une couche d'air adaptée aux meilleures conditions de travail.
Pour résoudre un tel problème, l'ensemble support est en deux parties dont l'une au moins est montée avec capacité de déplacement en translation sur une partie du corps pour permettre le réglage de la zone de sustentation, notamment de l'espace de sustentation latéral au niveau des branches verticales de la gorge. La partie mobile est assujettie à des organes élastiques de rappel sous forme, par exemple, de ressorts coniques

A noter que la présence des ressorts peut permettre l'arrêt immédiat des roues à aiguilles si la pression d'air passe en dessous d'une valeur non autorisée.

Compte tenu des caractéristiques à la base de l'invention, il est possible d'utiliser des roues à aiguilles dont le diamètre est inférieur à 300 mm et est avantageusement de l'ordre de 200 mm.

Un autre problème que se propose de résoudre l'invention est de pouvoir compenser les différences de tension entre les lisières et le centre du tissu.
Pour résoudre un tel problème, le dispositif comporte, en aval ou en amont notamment des roues à aiguilles, des rouleaux de compensation présentant des agencements aptes à créer des différences de tension entre les lisières et le centre du tissu.

Avantageusement, compte tenu du problème posé à résoudre, dans une forme de réalisation, les agencements sont constitués par un matériau déformable présentant une résistance progressive à l'écrasement.
Dans une autre forme de réalisation, les agencements sont constitués par une chambre à air gonflable.

L'invention est exposée ci-après plus en détail à l'aide des figures des dessins annexés dans lesquels :
- la figure 1 est une vue en coupe longitudinale partielle montrant le principe à la base du dispositif redresseur de trame, selon l'invention ;
- la figure 2 est une vue de face à caractère schématique montrant une forme de réalisation d'un rouleau de compensation des différences de tension entre les lisières et le centre du tissu.

Comme indiqué, l'invention concerne une machine ou dispositif redresseur de trame d'un tissu pour machine textile.

Plus particulièrement, le redresseur de trame présentant des roues à aiguilles dont le but est de repositionner la trame, en alignement avec les axes de rotation des roues, c'est-à-dire perpendiculairement au sens d'entraînement du tissu. Par exemple, ce dispositif redresseur de trame peut être disposé en amont d'une machine d'impression du tissu ou à l'entrée d'autres machines nécessitant un droit fil.

Ce principe redresseur de trame n'est pas décrit en détail, car parfaitement connu pour un homme du métier. L'invention concerne plus particulièrement la conception et le montage des roues à aiguilles afin de diminuer au maximum les frottements avec pour conséquence de pouvoir diminuer, d'une manière significative, le diamètre des roues à aiguilles.

Selon une caractéristique à la base de l'invention, le dispositif comprend un ensemble support (1) faisant office de palier pour le montage, à libre rotation, d'une roue libre à aiguilles (2). Généralement, le dispositif présente, d'une manière connue, deux roues libres espacées en fonction de la largeur du tissu. Par conséquent, pour ne pas alourdir la description, on décrit le montage pour une seule roue à aiguilles.

L'ensemble support (1) présente des agencements pour créer une zone de sustentation pneumatique (3) apte à diminuer, d'une manière significative, les frottements lors de la rotation des roues à aiguilles (2) sous l'effet de l'entraînement du tissu.

Dans la forme de réalisation illustrée, l'ensemble support (1) se présente sous forme d'une couronne présentant sensiblement, dans sa partie médiane, une gorge annulaire (1a) dans laquelle est montée une partie (2a) de la roue faisant office de moyeu. La gorge (1a) présente une section transversale en U dont les branches verticales parallèles (1a1) et (1a2) et horizontale (1a3) sont en communication avec une chambre annulaire (1b) apte à être alimentée en air. Cette communication s'effectue par une pluralité d'orifices (1c) formés dans l'épaisseur des différentes branches (1a1), (1a2), (1a3). La chambre (1b) est alimentée en air à partir d'une canalisation (4a) formée dans un corps fixe (4) présentant, directement ou d'une manière rapportée, l'ensemble support (1).

Compte tenu de ces caractéristiques, il apparaît donc que l'air envoyé dans la chambre (1b) va créer un coussin d'air au niveau des différentes parties du moyeu (2a) en contact avec les branches de la gorge où est montée tournante la roue à aiguilles correspondante (2).

Avantageusement, l'ensemble support (1) est en deux parties (A) et (B) dont l'une au moins (B) est montée avec capacité de déplacement en translation sur une portée circulaire (4b) du corps (4). Ce montage, avec capacité de déplacement en translation, a pour effet de permettre le réglage de la zone de sustentation, notamment de l'espace de sustentation latérale en diminuant ou en augmentant l'épaisseur du coussin d'air au niveau des branches verticales (1a1) et (1a2) de la gorge (1a).
A noter qu'au niveau de la jonction des deux parties (A) et (B), ces dernières présentent une gorge pour le montage d'un moyen élastique d'étanchéité (8). En effet, compte tenu du déplacement de la partie (B) de quelques centièmes de millimètres seulement, l'élasticité du moyen (8) évite toute fuite d'air.
La partie mobile (B) de l'ensemble (1) est assujettie à des organes élastiques (5) sous forme de ressorts coniques. Il est par conséquent possible d'obtenir la couche d'air idéale en fonction de la pression réglable des ressorts. A noter également que la présence des ressorts (5) permet l'arrêt immédiat des roues à aiguilles (2) si la pression d'air passe en dessous d'une valeur autorisée.

Compte tenu des caractéristiques à la base de l'invention, en considérant la quasi-absence de frottements, il est possible d'utiliser des roues à aiguilles dont le diamètre est inférieur à 300 mm et est avantageusement de l'ordre de 200 mm. Des résultats satisfaisants ont été obtenus avec des roues d'un diamètre de 185 mm.

Selon une autre caractéristique, en aval ou en amont notamment des roues à aiguilles (2), le dispositif comporte des rouleaux de compensation (6) présentant des agencements aptes à créer des différences de tension entre les lisières et le centre du tissu.

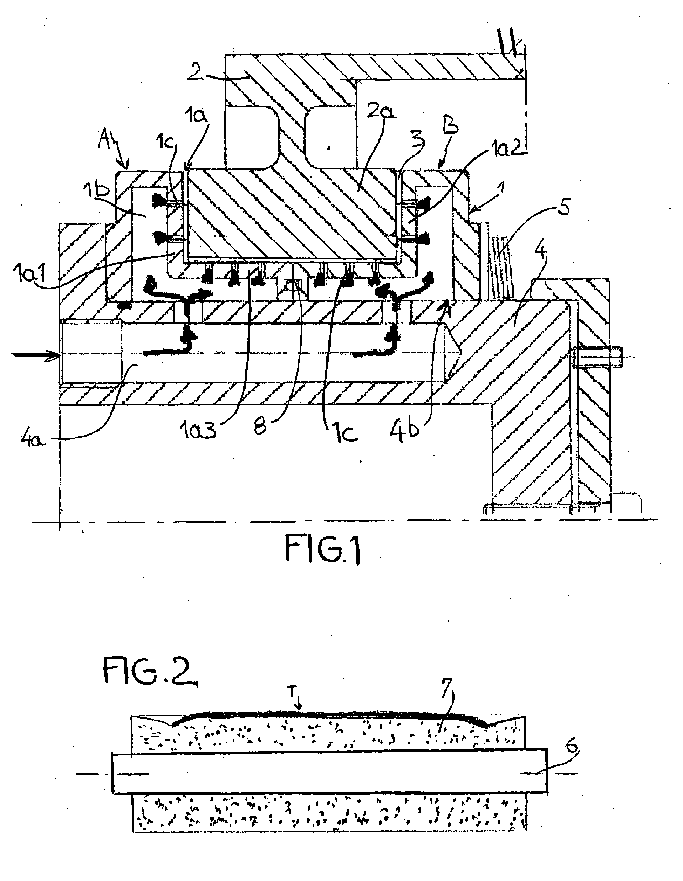

Comme le montre la figure 2, ces agencements peuvent être constitués par un matériau déformable (7) présentant une résistance progressive à l'écrasement. On renvoie à l'exemple de réalisation de la figure 2 qui montre la déformation du matériau constituant le rouleau au niveau des lisières (L) du tissu (T). A noter que ces agencements peuvent également être constitués par au moins une chambre à air gonflable.

Les avantages ressortent bien de la description, en particulier on souligne et on rappelle :
- la possibilité d'utiliser des roues à aiguilles de diamètre très inférieur à ce qui existe actuellement sur le marché compte tenu de la quasi-absence de frottements au moment de leur entraînement résultant de la sustentation pneumatique ;
- la réduction de l'inertie, de sorte qu'il n'est plus nécessaire d'entraîner en continu les roues à aiguilles ;
- l'arrêt automatique en l'absence de pression d'air ;
- le système de rouleaux de compensation avec un matériau à déformation progressive en fonction de la pression exercée ;
- l'adaptation du dispositif à des machines très petites pour tables d'impression, et à des machines notamment du type de celles à jet d'encre ou autre technologie ;
- l'utilisation de la sustentation pneumatique pour diminuer les frottements dans les machines textiles en général.

## Revendications

1. Dispositif redresseur de trame d'un tissu pour machine textile au moyen de roues à aiguilles (2), **caractérisé en ce qu'**il comprend un ensemble support (1) faisant office de palier pour le montage à libre rotation de chaque roue (2), ledit ensemble (1) présentant des agencements pour créer une zone de sustentation pneumatique apte à diminuer les frottements lors de la rotation des roues (2) sous l'effet de l'entraînement du tissu.

2. Dispositif selon la revendication 1, **caractérisé en ce que** les agencements de l'ensemble (1) sont constitués par une gorge annulaire (1a) dans laquelle est montée une partie de la roue faisant office de moyeu, ladite gorge (1a) étant en communication avec une chambre (1b) apte à être alimentée en air.

3. Dispositif selon la revendication 2, **caractérisé en ce que** la gorge (1a) présente une section transversale en U dont les branches verticales (1a1) et (1a2) et horizontales (1a3) sont en communication avec la chambre (1b), par des orifices (1c) formés dans l'épaisseur desdites branches.

4. Dispositif selon les revendications 1 à 3, **caractérisé en ce que** la chambre (1b) est alimentée en air par une canalisation (4a) formée dans un corps fixe (4) recevant l'ensemble support.

5. Dispositif selon les revendications 1 à 4, **caractérisé en ce que** l'ensemble support (1) est en deux parties (A) et (B) dont l'une au moins (B) est montée avec capacité de déplacement en translation sur une partie du corps (4) pour permettre le réglage de la zone de sustentation, notamment de l'espace de sustentation latéral au niveau des branches verticales de la gorge.

6. Dispositif selon la revendication 5, **caractérisé en ce que** la partie mobile (B) est assujettie à des organes élastiques de rappel sous forme de ressorts (5).

7. Dispositif selon les revendications 1 à 6, **caractérisé en ce que** le diamètre des roues (2) est inférieur à 300 mm et est avantageusement de l'ordre de 200 mm.

8. Dispositif selon les revendications 1 à 7, **caractérisé en ce qu'**il comporte des rouleaux de compensation (6) présentant des agencements aptes à créer des différences de tension entre les lisières et le centre du tissu.

9. Dispositif selon la revendication 8, **caractérisé en ce que** les agencements sont constitués par un matériau déformable (7) présentant une résistance progressive à l'écrasement.

10. Dispositif selon la revendication 8, **caractérisé en ce que** les agencements sont constitués par au moins une chambre à air gonflable.

## Claims

1. Device for straightening the weft of a fabric for a textile machine by means of needle wheels (2), **characterised in that** it comprises a support assembly (I) acting as a bearing for the freely rotating mounting of each wheel (2), the said assembly (1) having arrangements for creating an air lift zone for decreasing the friction during the rotation of the wheels (2) under the effect of the entrainment of the fabric.

2. Device according to Claim 1, **characterised in that** the arrangements of the assembly (1) consist of an annular groove (1a) in which a portion of the wheel acting as a hub is mounted, the said groove (1a) communicating with a chamber (1b) suitable for being supplied with air.

3. Device according to Claim 2, **characterised in that** the groove (1a) has a U cross section of which the vertical (1a1) and (1a2) and horizontal (1a3) branches communicate with the chamber (1b), via orifices (1c) formed in the thickness of the said branches.

4. Device according to Claims 1 to 3, **characterised in that** the chamber (1b) is supplied with air via a line (4a) formed in a fixed body (4) accommodating the support assembly.

5. Device according to Claims 1 to 4, **characterised in that** the support assembly (1) is in two parts (A) and (B) whereof at least one (B) is mounted with capacity for translational motion on a portion of the body (4) for adjusting the lift zone, in particular the side lift space at the vertical branches of the groove.

6. Device according to Claim 5, **characterised in that** the mobile portion (B) is subject to elastic return members in the form of springs (5).

7. Device according to Claims 1 to 6, **characterised in that** the diameter of the wheels (2) is lower than 300 mm and is advantageously about 200 mm.

8. Device according to Claims 1 to 7, **characterised in that** it comprises compensation rolls (6) having arrangements for creating differences in tension between the selvedges of the fabric and the centre thereof.

9. Device according to Claim 8, **characterised in that** the arrangements consist of a deformable material (7) having a progressive crush strength.

10. Device according to Claim 8, **characterised in that** the arrangements consist of at least one inflatable inner tube.

## Patentansprüche

1. Gewebe-Schussfadenrichtsystem für Textilmaschinen mittels Nadelrädern (2), **dadurch gekennzeichnet, dass** es eine als Lager dienende Trägerbaugruppe (1) für die freidrehbare Montage jedes Rades (2) umfasst, wobei die besagte Baugruppe (1) Vorkehrungen zur Schaffung einer pneumatischen Schwebezone aufweist, die geeignet ist, die bei der Drehung der Räder (2) unter Einwirkung der Gewebemitnahme auftretenden Reibungen zu verringern.

2. Vorrichtung nach Anspruch 1, **dadurch gekennzeichnet, dass** die Vorkehrungen der Baugruppe (1) aus einer ringförmigen Nut (1a) bestehen, in der ein Teil des als Nabe dienenden Rades angebracht ist, wobei die besagte Nut (1a) mit einer Kammer (1b) in Verbindung steht, die geeignet ist, mit Luft versorgt zu werden.

3. Vorrichtung nach Anspruch 2, **dadurch gekennzeichnet, dass** die Nut (1a) einen Querschnitt in Form eines U aufweist, dessen senkrechte (1a1) und (1a2) und waagrechte (1a3) Schenkel über in der Materialdicke der besagten Schenkel ausgebildete Öffnungen (1c) mit der Kammer (1b) in Verbindung stehen.

4. Vorrichtung nach den Ansprüchen 1-3, **dadurch gekennzeichnet, dass** die Kammer (1b) durch eine Leitung (4a), die in einem die Trägerbaugruppe aufnehmenden ortsfesten Gehäuse (4) ausgebildet ist, mit Luft versorgt wird.

5. Vorrichtung nach den Ansprüchen 1 - 4, **dadurch gekennzeichnet, dass** die Trägerbaugruppe (1) aus zwei Teilen (A) und (B) besteht, wovon mindestens ein Teil (B) verschiebbar an einem Teil des Gehäuses (4) angebracht ist, um die Einstellung der Schwebezone, insbesondere des seitlichen Schweberaums im Bereich der senkrechten Schenkel der Nut, zu ermöglichen.

6. Vorrichtung nach Anspruch 5, **dadurch gekennzeichnet, dass** der bewegliche Teil (B) von elastischen Rückstellorganen in Form von Federn (5) abhängig ist.

7. Vorrichtung nach den Ansprüchen 1 - 6, **dadurch gekennzeichnet, dass** der Durchmesser der Räder (2) geringer als 300 mm ist und vorteilhafterweise ungefähr 200 mm beträgt.

8. Vorrichtung nach den Ansprüchen 1 - 7, **dadurch gekennzeichnet, dass** sie Ausgleichswalzen (6) mit Vorkehrungen aufweist, die geeignet sind, Spannungsunterschiede zwischen den Kanten und dem Mittelpunkt des Gewebes zu schaffen.

9. Vorrichtung nach Anspruch 8, **dadurch gekennzeichnet, dass** die Vorkehrungen aus einem verformbaren Werkstoff (7) bestehen, der eine zunehmende Stauchfestigkeit aufweist.

10. Vorrichtung nach Anspruch 8, **dadurch gekennzeichnet, dass** die Vorkehrungen aus mindestens einer aufblasbaren Luftkammer bestehen.
